# FASCICULE DE BREVET EUROPEEN

(11) **EP 2 893 266 B1**
(45) Date de publication et mention de la délivrance du brevet: **23.08.2017**
(21) Numéro de dépôt: 13763205.5
(22) Date de dépôt: 06.09.2013
(51) Int. Cl.: F24J 2/06, F24J 2/08, G02B 6/42, F21V 8/00

(54) **CELLULE SOLAIRE OPTIQUE**
OPTISCHE SOLARZELLE
OPTICAL SOLAR CELL

(30) Priorité: 07.09.2012 FR 1202395
(43) Date de publication de la demande: 15.07.2015
(73) Titulaire: Ugolin, Nicolas Gilbert, 75002 Paris (FR)
(72) Inventeur: Ugolin, Nicolas Gilbert, 75002 Paris (FR)
(74) Mandataire: Gevers & Orès
(86) Numéro de dépôt international: PCT/EP2013/068470
(87) Numéro de publication internationale: WO 2014/037504

(56) Documents cités:
- EP-A2- 0 875 724
- EP-A2- 0 922 914
- WO-A1-2007/099564
- WO-A2-2012/097260
- DE-A1- 3 634 213
- US-A- 5 531 969
- US-A1- 2002 148 497

## Description

L'énergie solaire représente un enjeu stratégique, politique et industriel dans la gestion de l'énergie à l'échelle mondiale.

Actuellement, deux grands types de technologies dominent le marché de l'énergie solaire:
- D'une part, les technologies de type photovoltaïque qui consistent à transformer l'énergie solaire en courant électrique en utilisant l'effet photovoltaïque de semi-conducteurs et notamment du silicium.
   Cette technologie se décompose principalement dans les procédés :
   utilisant le silicium sous forme cristalline, qui permet d'atteindre des rendements de l'ordre de 14%, mais au prix d'une technologie très coûteuse, qui demande une grande quantité d'énergie initiale pour la fabrication des cellules.
   utilisant le silicium amorphe, moins cher et moins gourmand en énergie à la fabrication, mais avec un rendement atteignant seulement 9%.
   utilisant des peintures de semi-conducteurs et/ou de nanoparticules, cette technologie annoncée pour atteindre les 24% n'est toujours pas disponible.
- D'autre part, les technologies thermos-solaires, qui consiste à concentrer le rayonnement solaire et à le convertir en calories afin de les utiliser par exemple pour produire de l'électricité par un procédé thermodynamique ou de l'eau chaude sanitaire... Les procédés thermos-solaires offrent généralement un rendement voisin de 30%, en revanche ils sont plus encombrants que les procédés photovoltaïques. Hormis les dispositifs de chauffe-eau solaire, les procédés thermos-solaires sont difficilement intégrables à l'architecture des bâtiments, essentiellement en raison de la forme et de la dimension des concentrateurs et des capteurs solaires. De plus, bien que proportionnellement leur coût de fabrication et l'énergie initiale nécessaire à la fabrication sont plus faibles que pour le thermo-solaire, ces coûts sont généralement contrebalancés par la taille des installations nécessairement plus importantes pour être économiquement viables et concurrentielles au photovoltaïque.

Nous proposons une alternative de capteur solaire, sous forme de cellule solaire optique permettant de rendre la partie de captage des rayonnements solaires mieux adaptable à l'architecture. Elle permet notamment de capturer le rayonnement solaire de manière efficace sans nécessiter le suivi de la course du soleil, contrairement à la plupart des systèmes thermosolaires thermiques. Cette invention peut toutefois être adaptée pour des systèmes de traquage existants. Cette technologie, applicable pour les procédés thermos-solaires, l'est également dans les technologies de lasers solaires.

### Principe

Dans ce qui suit, Fig X-Y signifie : référence Y de la figure X.

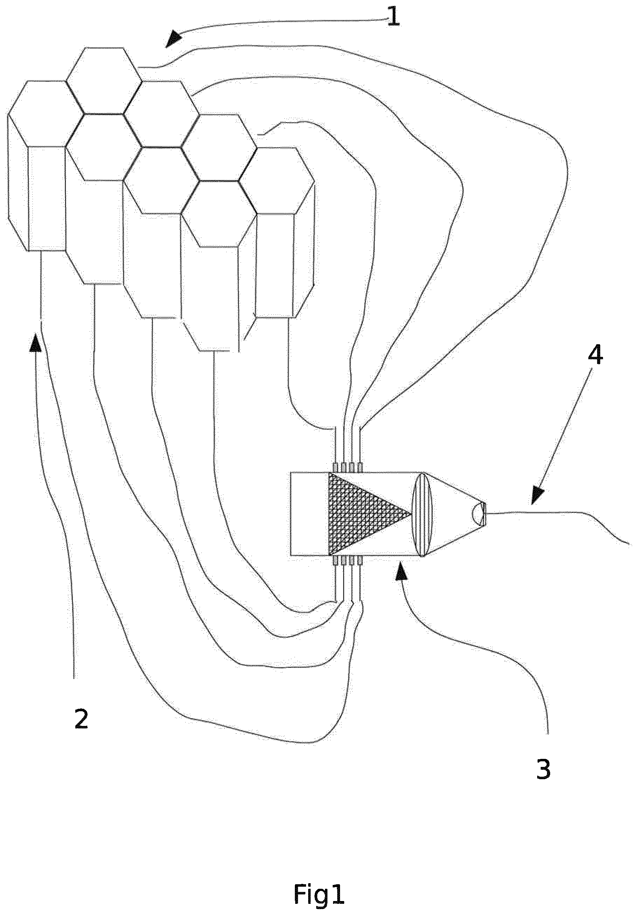

Le principe consiste à utiliser au moins une matrice de concentrateurs optiques Fig1-1, connectée à au moins une matrice de fibres optiques Fig1-2, connectée à au moins un collecteur optique Fig1-3, permettant de concentrer le rayonnement provenant de toute ou partie de la matrice de fibres optiques en une fibre optique Fig1-4 ou éventuellement en un nombre inférieur de fibres optiques ou en un rayon lumineux, tel que chaque concentrateur optique de la matrice de concentrateurs fasse converger ou dévier la lumière solaire, afin que cette lumière soit capturée par les fibres optiques de la matrice de fibres, les fibres optiques de la matrice de fibres concentre alors la lumière en une seule fibre optique ou en un seul rayon lumineux collimaté à la sortie du collecteur auquel lesdites fibres optiques de la matrice de fibres sont reliées. L'ensemble forme une cellule solaire optique.

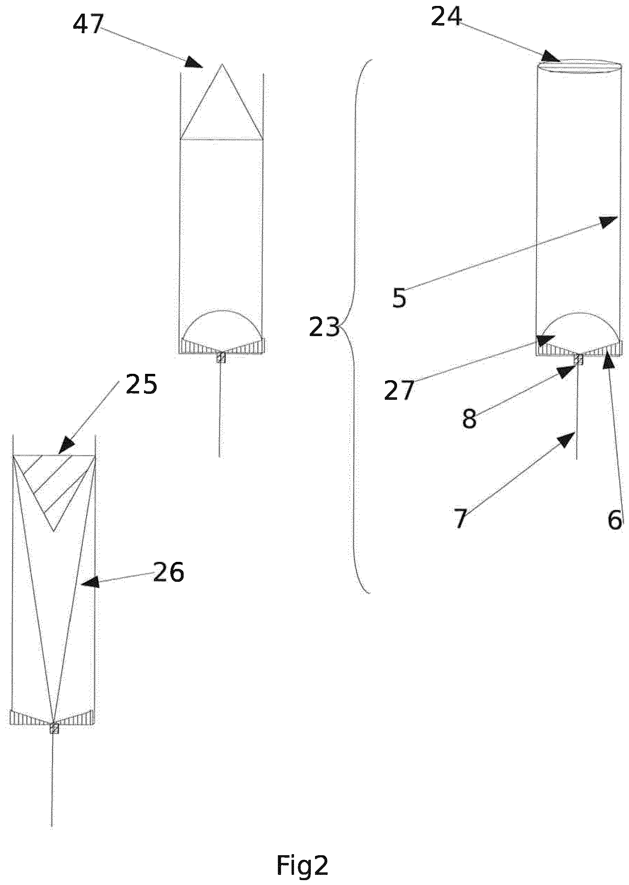

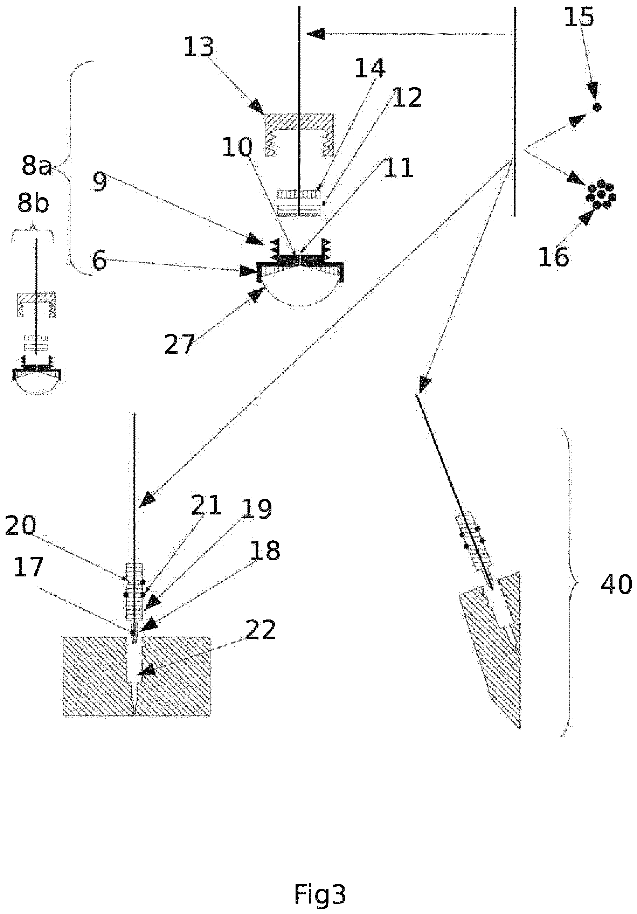

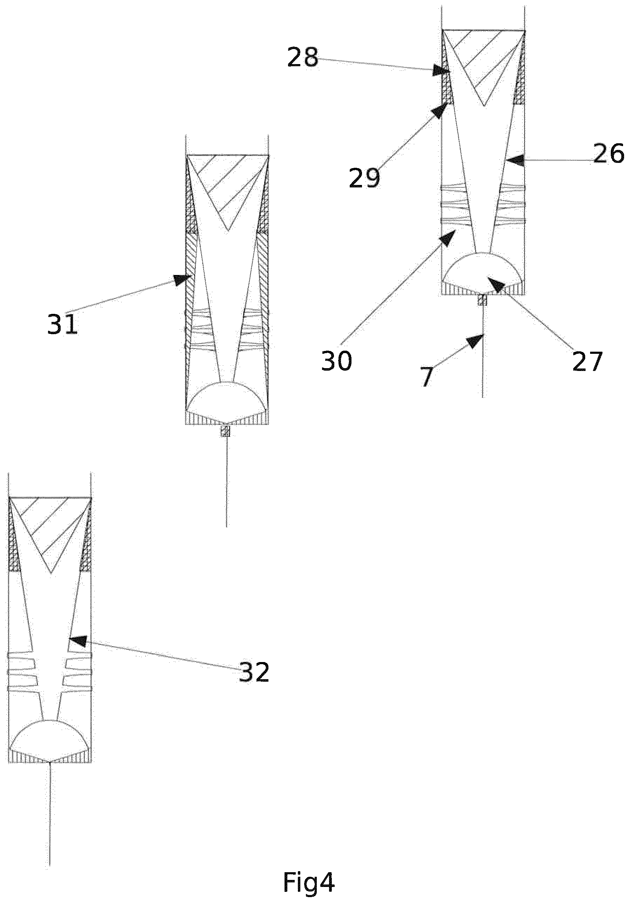

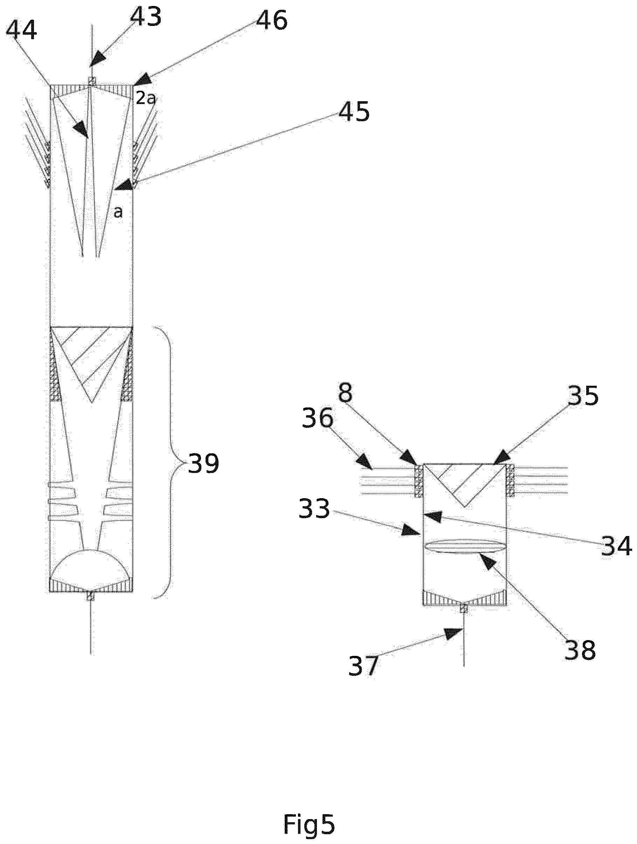

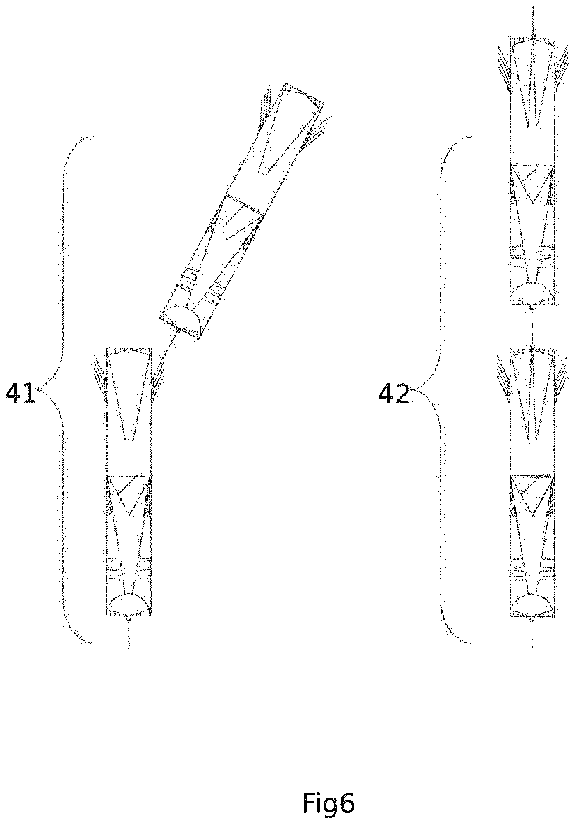

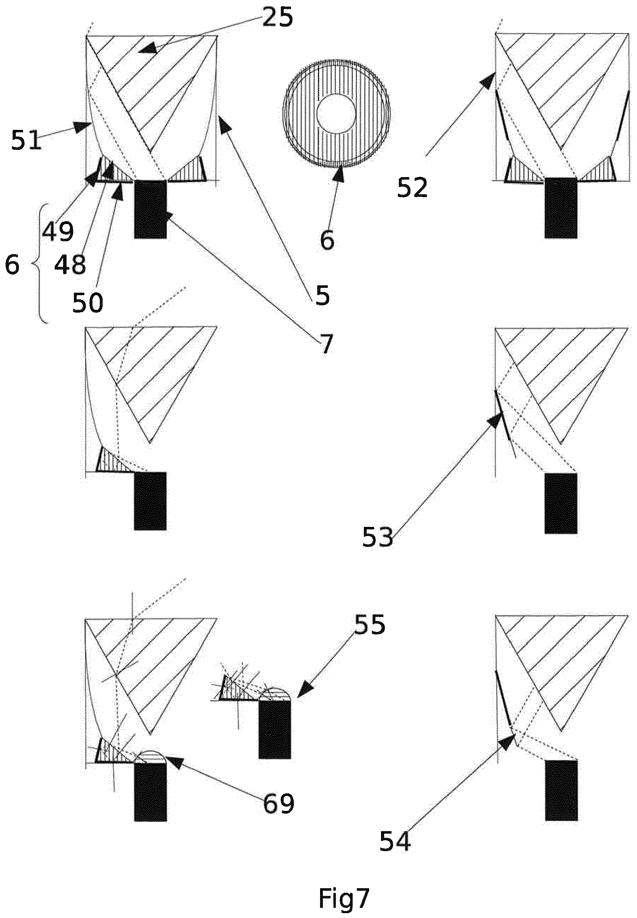

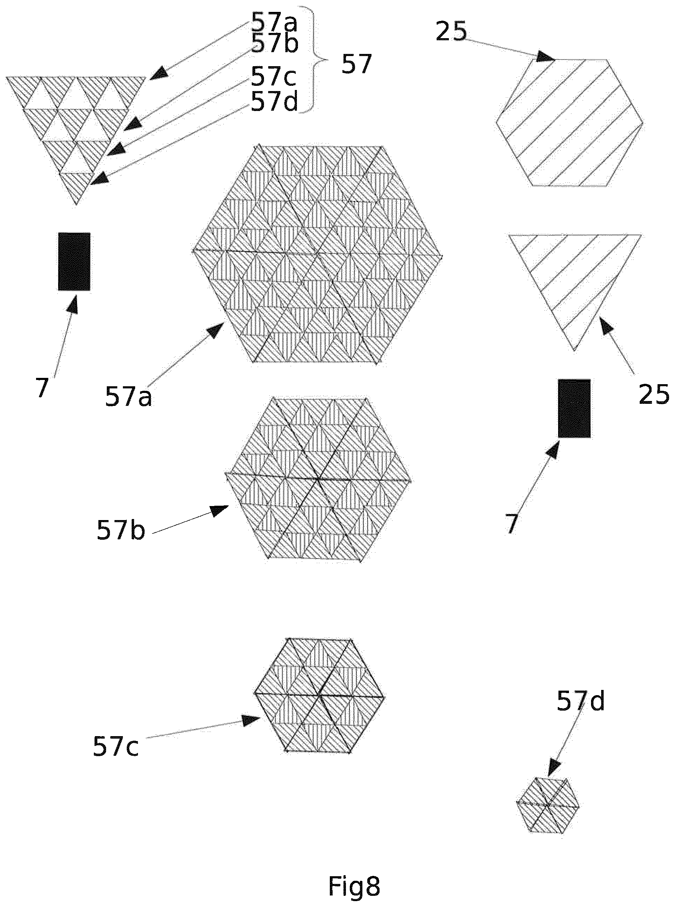

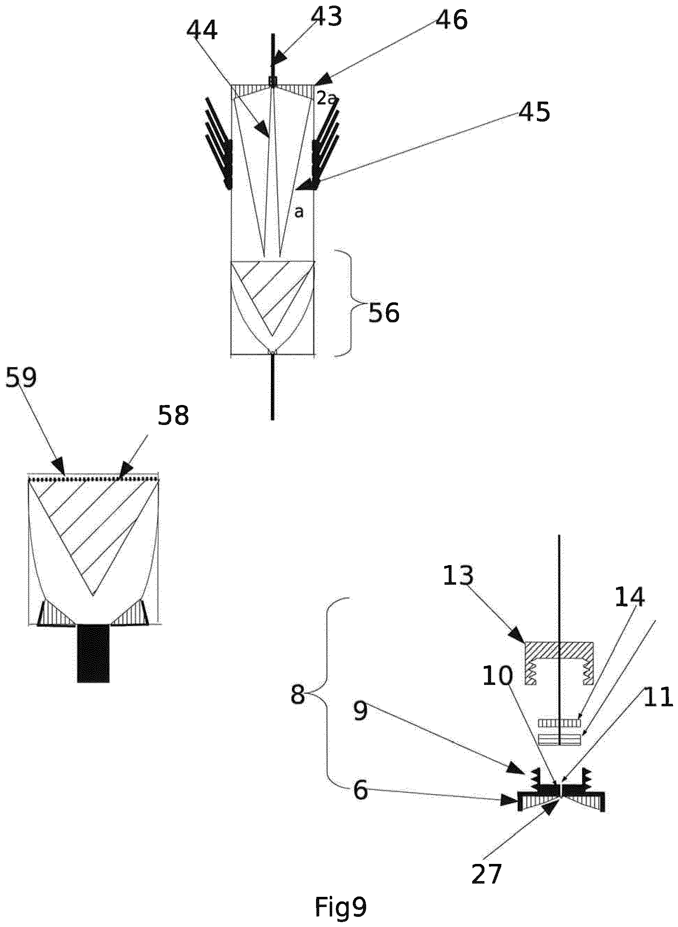

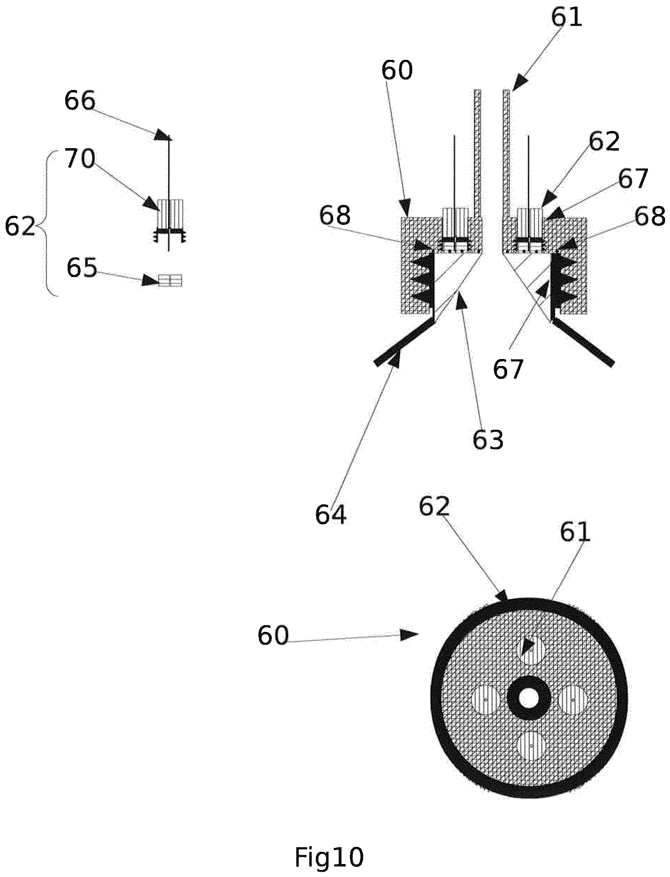

On entend ici par matrice, une organisation par répétition d'un même type d'élément ou d'un ensemble d'éléments en ligne et/ou en colonne, les éléments pouvant éventuellement être décalés les uns par rapport aux autres d'une ligne à l'autre ou d'une colonne à l'autre. La matrice comprendra au moins 4 éléments. Toutefois, chaque cellule de la matrice peut être utilisée séparément.
A) La matrice de concentrateurs optiques comprend une matrice de colonnes creuses (Fig1-1) telles que les faces d"une colonne de la matrice sont parallèles (Fig 2-5), coniques, ou de toute autre forme. La coupe transversale d'une colonne de la matrice de colonnes peut avoir n'importe quelle forme géométrique, dans un mode de réalisation préférentiel, elle aura une forme hexagonale fig1-1 pour former une structure en nid d'abeille avec un diamètre circonscrit aux hexagones préférentiellement compris entre 10cm et 0,3 cm, et une hauteur comprise entre 1mm et 20cm, ces dimensions étant seulement indicatives et non limitatives. Les faces intérieures des colonnes forment une surface réfléchissante Fig 2-5. Le fond de chaque colonne comporte un dispositif optique permettant de faire converger la lumière vers une fibre optique disposée au centre du dispositif Fig2-6. Le dispositif de convergence peut être formé d'un prisme annulaire Fig 7-6 avec un pan transparent Fig-7-48 présentant un angle avec l'axe longitudinal de la colonne, par exemple de 45°, et deux faces comportant chacune un miroir Fig7-49-50. La géométrie du prisme annulaire étant éventuellement dépendante de la géométrie retenue pour la forme des colonnes formant la matrice de colonnes. Le centre du prisme annulaire correspond à un orifice au fond de la colonne pour le passage d'au moins une fibre optique de concentration Fig2-7. Le fond de la colonne dispose éventuellement d'un dispositif de montage rapide de fibre optique Fig2-8. Dans certains modes de réalisation, les colonnes peuvent avoir des formes géométriques différentes au sein d'une même matrice. Les colonnes seront en tout matériau tel que sans être exhaustif, plastiques, bois, métal, polymère, carbone céramique etc. De préférence les colonnes seront réalisées en aluminium ou en un métal ou alliage métallique permettant de réfléchir la lumière.
A-1) Un dispositif de montage rapide à vis Fig3-8a consiste en un pas de vis Fig3-9 enserrant une rondelle Fig3-10 percée d'un trou Fig3-11 d'un diamètre égal au diamètre de la fibre optique Fig3-15, ou éventuellement d'un faisceau de fibres optiques Fig3-16 et appelée rondelle de pas. Les parois du trou sont parfaitement réfléchissantes et parallèles, de manière à constituer un trou optique. La rondelle de pas et le pas de vis faisant corps avec la structure devant être connectés avec la fibre. La fibre optique Fig3-15 ou le cas échéant le faisceau de fibres Fig3-16 est inséré(e) et fixé(e) dans une seconde rondelle, rondelle de fibre Fig3-12, de diamètre identique à la rondelle disposée dans le pas de vis. Le diamètre de la rondelle de fibre permet de l'ajuster simplement dans le pas de vis, de manière à ce que la fibre ou le faisceau de fibres soit exactement en vis-à-vis du trou de la rondelle de pas. L'épaisseur de la rondelle de pas est telle qu'elle permet son montage rapide et son maintien grâce à l'écrou Fig3-13. Un joint de serrage Fig3-14 est éventuellement introduit entre la rondelle de fibre et le l'écrou afin de permettre un serrage sans écraser la fibre optique ou le faisceau. La rondelle de fibre et la fibre pourront être polies en même temps pour obtenir une surface parfaitement plate. Dans certains modes de réalisation, les trous de la rondelle de pas comprendront un hublot transparent par exemple en quartz ou tout autre matériau transparent pour les longueurs d'onde utilisées. Dans un mode de réalisation préférentiel, le trou de la rondelle de pas sera rempli d'un liquide optique tel qu'une huile silicone ou toute autre huile optique ou tout autre liquide permettant de réaliser la connectivité optique. Dans certains modes de réalisation Fig3-8b la fibre dépassera de la rondelle de fibre, de manière à pénétrer dans le trou du fond de la colonne, pour arriver au niveau inférieur du prisme annulaire.
A-2) Dans certains modes de réalisation, un dispositif compact de montage rapide est utilisé. Les fibres seront connectées avec un système de fibrage compact comprenant un tube métallique, en matière plastique, céramique ou toute autre matière Fig3-18 présentant une cannelure Fig3-17 du diamètre de la fibre Fig3-15 ou le cas échéant d'un faisceau de fibres Fig3-16, dans lequel la fibre ou le faisceau de fibres est glissé(e). La surface de la cannelure est polie de manière à former un miroir. Le tube présente un décrochement tel que le diamètre extérieur du tube soit augmenté par exemple d'un facteur 1,5 Fig3-19 alors que le diamètre intérieur de la cannelure recevant la fibre ou éventuellement le faisceau de fibres reste constant. La partie augmentée du tube métallique possède au moins une cannelure annulaire Fig3-20 permettant la disposition d'un joint torique Fig3-21, l'ensemble formant une fiche optique. Le réceptacle de la fibre est constitué par une cavité complémentaire au tube métallique Fig3-22 constituée par un canal de diamètre égal à la partie étroite du tube métallique suivie d'un autre canal de diamètre égal à la partie large du tube métallique. En glissant la fiche optique dans la cavité complémentaire le joint torique permet de maintenir la fiche optique et la fibre en vis-à-vis d'un trou optique, pour injecter la lumière dans une autre unité ou éventuellement une autre fibre optique. Dans certains modes de réalisation, des huiles ou liquides optiques sont introduits dans les cannelures et les trous des dispositifs qui disposent alors de hublots. Dans certains modes de réalisation, la fibre sera collée dans la fiche optique. Le polissage simultané de l'extrémité de la fibre optique et de la fiche optique permet d'obtenir une surface parfaitement plane. Dans certains modes de réalisation, la fiche optique sera collée dans la cavité complémentaire en introduisant un cordon de colle en amont du joint torique.
   Dans d'autres modes de réalisation, la partie large de la fiche optique et la partie large du canal complémentaire comporte des systèmes de pas de vis complémentaires permettant de visser la fiche optique dans le canal.
   Ce système de câblage rapide pourra être utilisé dans le câblage des fibres de sortie des collecteurs, dans ce mode de réalisation la partie de la cavité en aval de la fibre présente des parois parfaitement parallèles et polies pour former un miroir. La partie de la cavité en aval du joint torique pourra être remplie d'huile optique ou de tout autre liquide optique.
   Dans certains modes de réalisation, la fibre optique pourra être dépassante pour pénétrer dans le trou optique.
A-3) Dans certains modes de réalisation, les colonnes de la matrice du concentrateur optique seront remplies d'un gaz minimisant l'absorption la lumière tel que argon, xeon, hélium etc. Dans un autre mode de réalisation, les colonnes du concentrateur seront sous vide pour minimiser l'absorption de la lumière.
A-4) Dans certains modes de réalisation, plusieurs fibres optiques sont montées avec un même connecteur rapide, les fibres sont collées Fig3-16 dans la rondelle de pas ou dans le connecteur par exemple avec une colle époxy, après polissage de la rondelle et des fibres, la rondelle est montée en face d'un trou optique d'un diamètre voisin du diamètre du faisceau de fibres.
B-1) Dans un mode de réalisation particulier, chaque concentrateur optique ou colonne Fig2-23 de la matrice de concentrateurs comprend à l'entrée de chaque colonne une lentille optique de convergence Fig2-24 et préférentiellement disposée à une distance, du trou de la rondelle de pas ou le cas échéant de l'entrée de la fibre optique, égale à la distance focale de la lentille. La distance focale de la lentille sera calculée en prenant en compte les indices de réfraction des milieux optiques entre la lentille et l'entrée de la fibre ou du trou de la rondelle de pas. La distance entre la lentille et l'entrée de la fibre sera calculée en fonction des autres éléments optiques inclus entre ces deux éléments. Les lentilles seront en tout matériau permettant le passage du plus grand spectre possible de lumière solaire allant des infrarouges aux ultraviolets. Elles pourront notamment être en quartz, plastique optique traité, à huile, gel de silicone ou tout autre matériau adéquat pour laisser passer le plus possible le spectre solaire des infrarouges aux ultraviolets.
   Les lentilles de la matrice de lentilles peuvent avoir n'importe quelle forme géométrique, dans un mode de réalisation préférentiel, les lentilles auront la même forme que celle des colonnes de la matrice de concentration.
   Dans un autre mode de réalisation la lentille au niveau de chaque colonne peut être substituée ou accompagnée par une structure prismatique conique ou pyramidale hexagonale, tel que le sommet de la structure prismatique soit dirigé vers l'extérieur et que ladite structure de la colonne de concentrateur pour que le sommet de ladite structure prismatique soit au même niveau que le bord de la colonne de concentrateur. Ceci constitue une structure prismatique inversée.
B-2) Dans certains modes de réalisation, chaque concentrateur optique ou colonne de la matrice de concentrateur comprend (à l'intérieur de chaque colonne), une structure prismatique Fig2-25 telle qu'une coupe longitudinale passant par l'axe de la structure prismatique forme un triangle de préférence équilatéral. La structure prismatique vue de haut aura préférentiellement la même forme que celle de la colonne, la base de la structure étant perpendiculaire à la paroi de la colonne l'obstruant tel que le sommet de la structure prismatique soit dirigé en vis-à-vis du trou de la rondelle de pas ou le cas échéant de la fibre optique de la colonne. La structure prismatique permet de redresser les rayons entrants traversant sa base, vers une perpendiculaire à sa base et de dévier les rayons sortants vers l'entrée de la fibre optique de concentration. La structure prismatique sera réalisée en tout matériau transparent, d'indice de réfraction n2 de préférence supérieur à l'air ou au vide tel que verre, quartz, plastique, PMMA etc. Elle pourra comprendre une partie constituant un miroir semi-transparent. Dans certains modes de réalisation, il pourra s'agir d'une structure creuse en verre, quartz ou plastique rempli d'une huile optique ou tout autre liquide optique, ou d'un gaz avec un indice de réfraction n2 de préférence supérieur à celui de l'air, notamment un gaz dont l'indice de réfraction augmente avec sa température. Dans cette dernière configuration, la température du gaz augmentera sous l'action du rayonnement augmentant ainsi sont indice de réfraction.
   Dans certains modes de réalisation, la structure prismatique sera incluse dans un cône d'intégration allant du bord de la base de structure prismatique jusqu'au trou de la rondelle à pas Fig2-26, le sommet du cône d'intégration étant tronqué pour qu'il puisse s'ouvrir vers le trou de la rondelle à pas. Les parois du cône d'intégration présenteront une inclinaison par rapport à l'axe principal de la colonne du concentrateur optique préférentiellement inférieure ou égale à 10°. Le milieu dans le cône d'intégration peut éventuellement avoir un indice de réfraction n3 supérieur à l'indice n1 de l'air ou du vide mais de préférence inférieur à l'indice n2 du ou des milieux formant la structure prismatique. Le reste de la colonne étant en un milieu d'indice n1. Dans certains modes de réalisation le cône d'intégration est constitué de parois de plastique, verre, quartz ou tout autre matériau transparent, et éventuellement rempli d'un liquide optique tel qu'une huile silicone et plus généralement une huile optique ou toute autre liquide optique dans lequel baigne la structure prismatique. Dans certains modes de réalisation, les parois du cône d'intégration comprendront des miroirs semi-transparents.
   Dans certains modes de réalisation, le dispositif optique permettant de faire converger la lumière vers une fibre optique, comprend en avant du trou de la rondelle de pas ou de la fibre optique de la colonne une portion de dioptre sphérique Fig4-27 Fig7-69. Dans certains modes de réalisation le dioptre sphérique est placé dans la partie conique du prisme annulaire, le cône d'intégration est alors tronqué Fig4-26 de manière à prendre appui et à réaliser une jonction optique avec le dioptre dans le prolongement du trou de la rondelle de pas ou de la fibre optique. Dans d'autres réalisations le dioptre sphérique a pour diamètre le diamètre du trou de la rondelle de pas ou de la fibre optique Fig7-69. Le centre du dioptre sphérique sera centré sur l'entrée du trou de la rondelle à pas ou de la fibre optique. L'indice de réfraction n4 du dioptre sera de préférence supérieur à l'indice n3 en amont du dioptre et de préférence inférieur ou égal à l'indice n5 de la fibre de concentration. Le dioptre et le prisme annulaire permettent de faire converger la lumière vers la fibre optique Fig7-55.
   Dans certains modes de réalisation, la paroi du cône d'intégration en vis-à-vis de la structure prismatique sera métallisée pour former une surface réfléchissante tel qu'un miroir Fig4-28. En fin de portion métallisée du cône d'intégration, la partie de la colonne de concentration incluse entre la paroi de la colonne et le cône d'intégration Fif4-29 sera fermée par un miroir annulaire. Ce dispositif permet de dévier et concentrer des rayons insuffisamment déviés (obliques) en sortie de la structure prismatique vers l'entrée du trou ou de la fibre optique de concentration et de renvoyer les rayons remontants vers la fibre optique de concentration. Les rayons lumineux d'incidence trop importants seront transmis au travers de la paroi du cône d'intégration, alors que les rayons lumineux d'incidence faible convergeront vers le fond du cône d'intégration vers l'entrée de la fibre optique. Dans certains modes de réalisation la face transparente du prisme annulaire Fig7-48 et la partie transparente du cône d'intégration Fig4-26 sont confondues. Dans certains modes de réalisation, la partie métallisée du cône d'intégration présente un profil comportant une partie parabolique Fig7-51, telle que la forme parabolique permet de dériver la lumière arrivant avec un certain angle vers le fond de la colonne qui comportera une fibre optique. La courbure de la parabole sera de préférence définie tel que les rayons diffractés par la structure prismatique Fig7-25 soient déviés vers l'entrée de la fibre optique. Dans certains modes de réalisation la partie métallisée ou miroir du cône d'intégration comprend des secteurs tels que le profil de chaque secteur soit plan, Fig7-52-53-54 de manière à former un cône présentant des secteurs d'inclinaison variable, l'inclinaison et la taille de chaque secteur étant définies pour dévier le rayon lumineux d'incidence maximal provenant de la structure prismatique vers l'entrée de la fibre optique.
B-3) Dans certains modes de réalisation, chaque concentrateur optique ou colonne de la matrice de concentrateurs comprend des systèmes d'au moins une lentille divergente entourant le cône d'intégration de capture (équivalent à l'angle solide de la section d'une colonne définie par le cône de capture de la fibre de concentration). Dans un mode de réalisation préférentielle le cône de capture et d'intégration sont confondus. Dans certains modes de réalisation, chaque lentille du système de lentilles sera superposée et constituée de lentilles annulaires Fig4-30 creuses en leur centre et dont le foyer forme un cercle circonscrit à une section transversale de la colonne. Les lentilles pourront être plan-concave ou bis-concave ou réalisées à l'aide d'un gradient d'indice de réfraction croissant et décroissant. Le bord des lentilles jouxtant le cône de capture de la fibre optique sera préférentiellement parallèle à la surface putative du bord dudit cône de capture. La largeur de chaque lentille sera définie par la distance entre la paroi de la colonne et le bord du d'intégration de la fibre de concentration. Dans certaines conditions, la distance focale des lentilles constituant le système de lentilles pourra être identique pour toutes les lentilles superposées. Toutefois dans un mode de réalisation particulier, la distance focale de chaque lentille sera égale à la distance séparant le centre de ladite lentille annulaire et l'entrée du trou de la rondelle à pas ou le cas échéant de l'entrée de la fibre optique.
B-4) Dans certains modes de réalisation, chaque concentrateur optique ou colonne de la matrice de concentrateurs comprend un cône divergent, un cône d'intégration inverse Fig4-31 Fig7-49, dont les parois vont de la fin de portion métallisée du cône d'intégration à la base du cône d'une section du prisme annulaire disposé au fond de chaque colonne de concentrateur. Les parois du cône d'intégration inverse formeront un miroir et seront par exemple réalisées en aluminium. Dans un mode particulier de réalisation, le cône d'intégration inverse est réduit à la face extérieure du prisme annulaire Fig7-49. Le prisme annulaire permet de dévier vers l'entrée de la fibre optique, les rayons lumineux, soit par réflexion sur la face transparente du prisme annulaire pour les rayons présentant une faible incidence, soit par diffraction et réflexion respectivement au travers de la face transparente et des faces réfléchissantes du prisme annulaire Fig7-55.
B-5) Dans certains modes de réalisation, le concentrateur optique sera une combinaison quelconque des quatre types de dispositifs B-1 à B-4. Dans un mode de réalisation préférentiel, chaque concentrateur optique de la matrice de concentrateurs comprend une structure prismatique entourée par un système de lentilles divergentes annulaires superposées insérées entre un cône d'intégration et un cône d'intégration inverse. Dans cette configuration, la forme de lentille annulaire sera complémentaire de la forme du cône d'intégration. Dans cette configuration, le dispositif pourra être complété par un miroir annulaire et d'un dioptre.
B-6) Dans certains modes de réalisation, le cône d'intégration et les systèmes de lentilles annulaires divergentes étagées Fig4-32 et/ou le cône d'intégration inverse seront fusionnés en une seule structure, les parois du cône d'intégration s'invaginant pour former la structure des lentilles divergentes étagées. Dans cette configuration, l'ensemble cône d'intégration et lentilles étagées pourra être une structure creuse en verre, en plastique ou tout autre matériau transparent rempli d'un liquide optique tel que huile, eau,...
B7) Dans certains modes de réalisation la structure prismatique comprend un ensemble de prismes organisés en différents étages Fig8-57. Chaque étage peut être constitué d'une organisation de prismes pyramidaux à base triangulaire ou hexagonale organisés en une structure hexagonale étagée. Cette structure étagée présente un pouvoir de déviation de la lumière vers l'entrée plus homogène que celle des structures prismatiques monolithiques Fig8-25.
B8) D'une manière générale les faces des éléments optiques assurant la transmission et la diffraction de la lumière seront traitées par des antireflets permettant de limiter les réflexions indésirables. De manière avantageuse les antireflets pourront être des antireflets multicouches et plus particulièrement de type solgel. De manière encore plus particulière ces antireflets pourront comporter au moins une couche d'accroche, au moins une couche d'un solgel comportant l'agent de l'antireflet et éventuellement une couche de vernis de fixation.
B9) Dans des modes de réalisation particulier la couche d'accroche et/ou la couche d'antireflet et/ou la couche de vernis de fixation pourra comporter des quantum dote ou toute autre particule quantique capable de transformer la lumière ultraviolette en lumière visible, plus efficacement transportée par les fibres optiques. Dans un mode de réalisation particulier la face supérieure de l'élément prismatique sera recouverte de particules quantiques telles que des quantum dote Fig9-58. Une membrane ou paroi transparente de protection Fig9-59 pourra être disposée avant la structure prismatique. Les colonnes de concentrateurs et de collecteurs peuvent contenir des gaz limitant l'absorption de la lumière tels que argon ou xénon, ce dernier ou ses dérivés pouvant participer à la transformation de la lumière ultraviolette en lumière visible.
C) les fibres 7 de sortie d'un ensemble de colonnes de concentrateurs, tel que chaque colonne forme une unité de concentration, converge sur un collecteur optique 3. Tout type de collecteur optique peut être utilisé, notamment ceux utilisés dans les systèmes de télécommunication par fibre optique. Dans un mode de réalisation préférentiel, le collecteur optique est formé d'une colonne Fig5-33 de préférence section cylindrique mais qui peut avoir une forme quelconque. Le cylindre peut être en n'importe quel matériau mais sera préférentiellement en aluminium. Les faces Fig5-34 intérieures d'une colonne du collecteur sont réfléchissantes de manière à former un miroir. A l'intérieur de la colonne de collecteur est disposé un cône dont les faces font un angle de 45° avec son axe principal Fig5-35, il s'agit du cône de collection. L'axe principal du cône de collection est aligné avec l'axe principal de la colonne du collecteur. Les surfaces du cône sont polies de manière à former une surface réfléchissante telle qu'un miroir. Des trous d'un diamètre correspondant au diamètre des fibres optiques ou le cas échéant, de faisceaux de fibres optiques sont percés sur la colonne du collecteur en vis-à-vis du cône de collection tel que l'axe des trous sont perpendiculaires à l'axe de la colonne de collection et à l'axe longitudinal du cône de collection. Un dispositif de connexion rapide de fibres Fig5-8 permet de connecter à chaque trou optique une fibre optique de concentrateur provenant d'un concentrateur unique ou un faisceau de fibres de concentration provenant par exemple de huit concentrateurs différents Fig5-36. Par exemple au niveau de chaque trou sur la colonne du collecteur, est disposée une rondelle percée d'un trou tel que le trou, la rondelle et le trou de la colonne de collection soient coaxiaux. Les faces intérieures des trous sont parfaitement polies de manière à obtenir un miroir. La face inférieure de la rondelle et complémentaire de la paroi du cylindre et la face supérieure parfaitement plane. La rondelle est entourée d'un pas de vis permettant le montage rapide d'une fibre montée dans une rondelle selon le procédé de montage rapide décrit au chapitre A. La lumière sortant des fibres montées en face des trous de la colonne du collecteur arrive avec un angle moyen de 45° sur la surface du cône de collection qui les réfléchit parallèlement à l'axe principal de la colonne du collecteur. La colonne du collecteur se termine par un cône percé d'un trou monté avec une fibre optique selon par exemple un procédé de montage rapide décrit au chapitre A, il s'agit de la fibre de collecteur Fig5-37. Dans certains modes de réalisation devant la fibre de collecteur est disposé un injecteur optique qui concentre et injecte la lumière dans la fibre de collecteur, la lumière provenant du cône de collection.
C-1) Dans certains modes de réalisation, le dispositif optique de concentration et d'injection optique du collecteur peut être constitué d'une lentille convergente Fig5-38 introduit entre le sommet du cône de collection et le trou d'entrée de la rondelle de la fibre de collection. La lentille sera placée de telle sorte que son foyer soit juste au niveau de l'entrée du trou de la rondelle de la fibre de collection, du trou optique, le cas échéant de l'entrée d'une fibre optique.
C-2) dans d'autres modes de réalisation, le dispositif d'injection une combinaison quelconque des éléments du concentrateur décrit aux chapitres B-1 à B-6 Fig5-39,Fig9-56.
D-3) Dans certains modes de réalisation, la colonne du collecteur optique aura une forme intérieure conique telle que la plus grande section du cône soit du côté de la fibre de collecteur.
C-4) Dans un mode de réalisation particulier, pour augmenter la capacité du collecteur optique sans augmenter son diamètre. L'angle « 2a « entre l'axe des trous sur les parois de la colonne du collecteur et l'axe principal de le cône de collection Fig5-2a sera diminué Fig3-40 et compris entre 1° et 90°, ledit angle sera préférentiellement compris entre 15° et 25°. De ce fait, l'angle que fait la paroi de la colonne de collection et l'axe principal de la colonne de collection sera égal à « 2a » divisé par 2 Fig5-a. Ainsi la majorité du rayonnement provenant des fibres optiques des concentrateurs optiques connectées sera dévié par le cône de collection, parallèlement à l'axe de la colonne de collection. Dans certains modes de réalisation, les angles des axes des trous d'implantation des fibres à la surface du cône de collection et l'angle de la paroi du cône de collecteur avec son axe seront modifiés en fonction d'un revêtement ou du dioptre d'indice n6 disposé sur la surface du cône de collecteur et/ou sur la face interne de la colonne de collecteur.
C-5) Dans certains modes de réalisation, le cône de collecteur sera supprimé dans cette configuration, la colonne de collecteur sera un cône tronqué dont la plus grande section est du côté de la fibre de collection. Sur la face intérieure du cône de collection notamment les espaces définis au niveau des trous d'implantation des fibres de concentration est disposé un dioptre d'indice n6 supérieur à l'indice du milieu à l'intérieur de la colonne de collection, de manière qu'en sortie de fibre de concentrateur, la lumière soit déviée du côté du l'injecteur optique.
C-6) Dans certaines conditions, la fibre optique de collecteur est remplacé par un collimateur par exemple cylindrique à face réfléchissante la lumière est alors concentrée en un rayonnement lumineux.
D) Dans certains modes de réalisation, les colonnes de collecteur pourront être montées en série pour transporter de collecteur en collecteur la lumière avant d'être éventuellement dirigée vers un effecteur final.
D-1) Afin de monter en série la lumière de plusieurs concentrateurs optiques, dans un premier mode de réalisation, la connexion en série est obtenue en connectant la fibre de collecteur d'une colonne de collecteur A à un trou latéral d'une colonne de collection B Fig6-41.
D-2) Dans un mode préférentiel, la fibre optique de collecteur d'une colonne de collecteur A est connecté en tête d'une colonne de collecteur B munie d'un dispositif de connexion et d'une fibre de tête Fig5-43 de collecteur Fig6-42. Le trou optique de la connexion en tête de la colonne de collecteur débouche dans un cylindre et préférentiellement un cône divergent disposé à l'intérieur du cône de collecteur, appelé cône de montage en série Fig6-44. Le cône de collection Fig6-45 sera tronqué du côté de son sommet de manière que la partie la plus large du cône de montage en série s'ouvre du côté du sommet du cône de collecteur. La partie la plus étroite du cône de montage en série s'ouvre en vis-à-vis du trou optique de tête de la colonne de collecteur. Dans certains modes de réalisation, le trou optique de tête est disposé au sommet d'un cône Fig6-46 dont la surface forme un miroir et dont la base est confondue avec la partie la plus large du cône de collection.
F1) dans certains modes de réalisation, au moins une matrice de concentration est disposée sur une dalle clipsable, en bois, plastique, polymère, carbone, verres, céramique, polyuréthane, polystyrène ou tout autre matériau utilisable pour réaliser des couvertures de toiture ou des surfaces étanches.
F2) dans certains modes de réalisation, les colonnes du collecteur des cellules solaires optiques seront disposées sur une dalle clipsable d'un même côté que la matrice de concentrateurs. Après montage des dalles et connexion en série des cellules solaires optiques d'une ligne de dalle, l'espace occupé par les colonnes de collecteurs sera protégé par un cache formé d'un miroir à deux pentes, permettant de réfléchir la lumière qui arrive à l'aplomb des colonnes du collecteur.
F3) dans certains modes de réalisation, les colonnes du collecteur seront disposées sous la dalle permettant de réalisé un surface continue cellules solaires optiques.
G) la lumière concentrée dans des fibres optiques au travers d'au moins une cellule solaire optique peut être utilisée dans tout les procédés utilisant la lumière en tant que telle ou une énergie en dérivant.
G1) la lumière concentrée dans les fibres optiques peut être utilisée pour la génération d'un faisceau laser en substituant ou complémentant les lampes flash ou les diodes d'excitation, et plus généralement le système d'excitation lumineuse par un système de fibres optiques relié à au moins une cellule solaire optique. Sans être exhaustif, le système de fibres optiques relié à au moins une cellule solaire optique, peut être utilisé comme source d'excitation pour les lasers à cristal solide, à gaz, à fibre, au tout autre procédé nécessitant une lumière d'excitation.
G2) dans d'autres modes de réalisation, un système de fibres optiques relié à au moins une cellule solaire optique, peut être utiliser pour réchauffer le gaz, le fluide, ou le liquide introduit dans un conteneur adiabatique à pression telle que sans être exhaustif, enceinte close munie de vannes, membrane ou sac contenu(e) dans une enceinte close munie de vannes, piston disposé dans une enceinte adiabatique close munie de vannes. Le faible diamètre des fibres optiques permet de les introduire dans une enceinte et d'introduire de la lumière dans ladite enceinte minimisant les affaiblissements de structure. La lumière en apportant de la chaleur au liquide ou au fluide contenu dans l'enceinte close, permet d'augmenter la pression du gaz et/ou de provoquer le changement d'état des fluides contenus dans le conteneur à pression. Ceci permet de stoker dans le gaz l'énergie lumineuse qui sera récupérée lorsque le gaz se détend.
G3) dans d'autres modes de réalisation, un système de fibres optiques relié à au moins une cellule solaire optique et comprenant au moins une matrice de concentration, peut être utilisé à chauffer de l'eau dans une enceinte close adiabatique munie de vannes tel qu'un ballon de chauffe-eau. Les cellules solaires optiques peuvent complémenter d'autres systèmes d'excitation pour former une excitation mixte.
G4) dans d'autres modes de réalisation, un système de fibres optiques relié à au moins une cellule solaire optique, peut être utilisé pour chauffer les gaz qui circulent dans une cheminée thermique.
H) dans certains modes de réalisation, le dispositif utilisé pour injecter la lumière provenant d'au moins une fibre optique Fig10-66 à l'intérieur d'une enceinte close Fig10-64 est comprenant un couvercle muni d'une bride ou d'un pas de vis Fig10-60 sur une face du couvercle sont disposés un ou plusieurs trou(s) Fig10-67. Chaque trou comprend un pas de vis pour un montage rapide des fibres Fig10-62.
   Un hublot de forme annulaire et de section prismatique Fig10-63 en quartz ou en tout autre matériau transparent est disposé de manière à obturer en partie l'ouverture de l'enceinte close. Le hublot laisse le passage d'un conduit pour la sortie ou l'entrée des gaz et/ou de liquides Fig 10-61. Des joints sont introduits au niveau du hublot Fig10-68 et des systèmes de montage de fibre. Une fibre optique montée sur une rondelle de diamètre égal au trou de montage de fibre Fig10-65 est alors disposée dans le trou de montage de fibre. Une bague filetée pourvue d'une cannelure Fig10-70 dans laquelle est insérée la fibre optique est adaptée au trou par vissage sur son pas de vis. Une huile optique peut être introduite pour réaliser la jonction optique. L'enceinte close peut comporter un piston ou une vessie permettant de compenser les diminutions de pression lors de la détente du gaz contenu dans l'enceinte close. L'enceinte close est remplie d'un gaz froid, ou partiellement remplie d'un liquide, d'un liquide super-critique tel que dioxide de carbone supercritique ou d'un solide tel que la carboglace. Une vanne située sur le conduit F10-61 est alors fermée. La lumière injectée par les fibres optiques du bouchon optique de l'enceinte close fait alors augmenter la température à l'intérieur de l'enceinte close entraînant le changement de phase des solides ou liquides et l'augmentation de la pression des gaz. À l'ouverture de la vanne les gaz s'échappant de l'enceinte close permet de faire tourner une turbine pour produire de l'énergie, ou toute autre utilisation de gaz sous pression. Le gaz mis sous pression sous l'action de lumière injectée dans l'enceinte représente donc un moyen de stocker l'énergie.
G5) dans certains modes de réalisation où le conteneur clos est tissé directement avec un système de fibres (carbone, aramide ou autre) les fibres optiques peuvent être intégrées directement au tissage.
G6) dans certains modes de réalisation, les concentrateurs optiques à structure prismatique peuvent être utilisés seuls.
G7) G4) dans d'autres modes de réalisation, un système de fibres optiques relié à au moins une cellule solaire optique, peut être utilisé pour l'éclairage.

### LEGENDES DE L'ENSEMBLE DES FIGURES

1) matrice de concentrateurs optiques
2) matrice de fibres optiques
3) collecteur optique
4) Fibre de collecteur
5) surface interne réfléchissante d'une colonne de la matrice de concentrateurs
6) Dispositif optique de convergence de la lumière disposé au fond d'une colonne de la matrice de concentrateurs
7) fibre optique de concentration
8a) dispositif de montage rapide de fibre optique fibre rasante
8b) dispositif de montage rapide de fibre optique fibre dépassante
9) pas de vis insérant la rondelle de pas
10) rondelle de pas
11) trou de la rondelle de pas aux parois réfléchissantes et parallèles constituant un trou optique
12) rondelle de fibre
13) écrou de dispositif de montage rapide
14) joint de serrage de dispositif de montage rapide
15) fibre optique unique
16) faisceau de fibres optiques
17) cannelure tube métallique de fibrage compact
18) tube de système de fibrage compact
19) augmentation du diamètre du tube de système de fibrage compact
20) cannelure annulaire sur tube de système de fibrage compact
21) joint torique dans cannelure annulaire du tube de système de fibrage compact
22) cavité complémentaire à la fiche optique
23) exemple de concentrateur optique d'une matrice de concentrateurs
24) lentille optique de convergence
25) structure prismatique
26) cône d'intégration
27) dioptre sphérique
28) métallisation d'une partie du cône d'intégration pour former une surface réfléchissante tel un miroir
29) miroir annulaire fermant la partie de la colonne de concentration incluse entre la paroi de ladite colonne et le cône d'intégration
30) système de lentilles superposées et constitué de lentilles annulaires divergentes
31) cône d'intégration inverse
32) cône d'intégration et système de lentilles annulaires divergentes fusionnées
33) colonne du collecteur
34) faces intérieurs réfléchissantes d'une colonne du collecteur
35) cône de collection
36) fibre optique de concentrateur provenant d'un concentrateur unique ou un faisceau de fibres de concentration provenant de plusieurs concentrateurs
37) fibre de collecteur
38) injection optique du collecteur
39) injecteur optique réalisé sur la base des éléments d'un concentrateur
40) dispositif de montage rapide de fibre optique incliné
41) fibre de collecteur d'une colonne de collecteur A connecté à un trou latéral d'une colonne de collection B
42) fibre de collecteur A connectée en tête d'une colonne de collecteur B
43) fibre de tête de collecteur ou faisceau de fibres
44) cône de montage en série
45) cône de collection tronqué
46) cône inversé de tête de collecteur
47) structure prismatique inversée
48) -face transparente de la structure prismatique annulaire
49) -miroir de face opposée de la structure prismatique annulaire
50) miroir face inférieure de la structure prismatique annulaire
51) partie de cône d'intégration convergeant avec un profil parabolique
52) secteur du cône d'intégration présentant une inclinaison, définie pour dévier le rayon lumineux d'incidence maximale provenant de la structure prismatique vers l'entrée de la fibre optique.
53) secteur du cône d'intégration présentant une inclinaison, définie pour dévier le rayon lumineux d'incidence maximale provenant de la structure prismatique vers l'entrée de la fibre optique.
54) secteur du cône d'intégration présentant une inclinaison, définie pour dévier le rayon lumineux d'incidence maximale provenant de la structure prismatique vers l'entrée de la fibre optique.
55) couple prisme annulaire, dioptre sphérique,
56) injecteur optique réalisé sur la base des éléments d'un concentrateur
57) Structure prismatique étagée, chaque étage a,b,c est constitué d'un ensemble de prismes pyramidaux à base triangulaire, le dernier étage étant formé d'un prisme pyramidal à base hexagonale.
58) Couche antireflet comportant des quantum dote
59) paroi de protection
60) Bouchon de l'enceinte close
61) Conduit pour la sortie ou l'entrée des gaz et de liquides fermé par une vanne
62) Dispositif rapide de montage de fibres
63) hublot de forme annulaire et de section prismatique
64) enceinte close formant une bouteille à pression, pouvant comporter un piston ou une vessie de pression
65) rondelle de montage de fibre
66) Fibre optique
67) Trou pour disposition de fibre optique
68) joint torique
69) Dioptre sphérique de diamètre égal au diamètre de la fibre optique.
70) bague filetée pourvue de cannelures

## Revendications

1. Dispositif, comprenant au moins
a) une matrice de concentrateurs optiques (1), telle que la matrice de concentration comprend
i) des colonnes creuses (1), dont les faces intérieures réfléchissantes (5,31) sont éventuellement parallèles, mais préférentiellement divergentes pour former un cône divergent dont la base est située au fond de la colonne (31) constituant ainsi un cône d'intégration inverse, et telles qu'une coupe transversale d'une colonne d'un concentrateur présente n'importe quelle forme géométrique, et telles que le fond de chaque colonne comprend un orifice pour le passage d'au moins une fibre optique de concentration (7) le fond de chaque colonne étant de forme préférentiellement conique (6), avec au sommet de la forme conique ledit orifice, et que
ii) chaque colonne comprend, au moins une structure prismatique (25,47) présentant, par coupe longitudinale passant par l'axe, une forme de triangle, ladite structure prismatique étant réalisée en tout matériau transparent, et que
iii) chaque colonne comprend, au moins un dispositif d'injection de la lumière dans une fibre optique (6,55)
b) au moins une matrice de fibres optiques(2,7),
c) au moins un collecteur optique (3) comprenant au moins un cône de collection(35,45),
chaque colonne du concentrateur permettant de capturer un rayonnement solaire et de le concentrer dans une desdites fibres optiques formant un faisceau de fibres optiques, chaque colonne de concentrateur optique de la matrice étant configuré pour faire converger .ou dévier la lumière solaire, afin que cette lumière soit capturée par les fibres optiques de la matrice de fibres, lesdites fibres optiques étant reliées audit collecteur pour concentrer la lumière au travers du collecteur dans au moins une fibre optique ou au moins un rayon lumineux à la sortie du collecteur auquel lesdites fibres optiques sont reliées.

2. Dispositif selon la revendication 1, **caractérisé en ce qu'**un concentrateur optique de la matrice de concentrateurs comprend à l'entrée de chaque colonne une lentille préférentiellement convergente (24) et préférentiellement disposée à une distance d'un trou optique (10) ou le cas échéant de l'entrée d'une fibre optique (7) égale à la distance focale de ladite lentille, la distance focale de la lentille étant calculée en prenant en compte les indices de réfraction des milieux optiques entre la lentille et l'entrée de la fibre ou du trou optique, les lentilles étant en tout matériau permettant le passage du plus grand spectre possible de lumière solaire allant des infrarouges aux ultraviolets.

3. Dispositif selon la revendication 1 **caractérisé en ce que** chaque concentrateur optique de la matrice de concentrateurs comprend dans chaque colonne, au moins un cône d'intégration (26) allant par exemple du bord de la base d'une structure, prismatique jusqu'à un trou optique, le cas échéant à l'entrée d'une fibre optique (7), le sommet du cône d'intégration étant tronqué de manière à s'ouvrir vers un trou optique, le cas échéant l'entrée d'au moins une fibre optique, les parois dudit cône d'intégration présentant une inclinaison par rapport à la verticale et telle que la partie supérieure du cône d'intégration comporte un miroir (28), ledit miroir étant préférentiellement de profil parabolique (51), de plans inclinés successifs (52,53,54), ledit profil permettant de faire converger la lumière sortant de la structure prismatique vers une fibre ou système d'injection de fibre.

4. Dispositif selon l'une quelconque des revendications 1 et 3 **caractérisé en ce que** chaque colonne d'un concentrateur optique de la matrice de concentrateurs comprend, au moins une portion de dioptre sphérique (27, 69), le centre dudit dioptre sphérique étant centré sur l'entrée d'un trou optique, le cas échéant sur l'entrée d'une fibre optique, l'indice de réfraction n4 du dioptre étant de préférence supérieur au milieu en amont et de préférence inférieur ou égale à l'indice n5 de la fibre.

5. Dispositif selon la revendication 1, **caractérisé en ce que** chaque colonne de concentrateur optique de la matrice de concentrateurs comprend au moins un système d'au moins une lentille divergente telle que la au moins une lentille soit annulaire (30) creuse en son centre avec un foyer formant un cercle circonscrit à une section transversale d'une colonne.

6. Dispositif selon la revendication 1, **caractérisé en ce que** le dispositif d'injection de la lumière comprend au moins une structure annulaire de section prismatique (48) avec au moins une face réfléchissante (49,50)

7. Dispositif selon l'une quelconque des revendications 1 à 6, **caractérisé en ce qu'**un concentrateur optique de la matrice de concentrateurs comprend une combinaison quelconque d'au moins une lentille convergente à l'entrée de chaque colonne, d'au moins une structure prismatique, d'au moins un cône d'intégration, d'au moins un cône d'intégration inverse, d'au moins une portion de dioptre sphérique et d'au moins un système d'au moins une lentille divergente annulaire.

8. Dispositif selon l'une quelconque des revendications 1 à 7, **caractérisé en ce qu'**un collecteur optique comprend au moins une colonne du collecteur (33), telles que les faces intérieures de la colonne du collecteur soient réfléchissantes de manière à former un miroir, et que le collecteur comprend un système de connexion de fibre de concentrateur (8), et une combinaison quelconque d'un système de convergence de la lumière vers un trou optique, le cas échéant l'entrée d'au moins une fibre (45,44), un système d'injection des la lumière dans la fibre.

9. Dispositif selon la revendications 8, **caractérisé en ce qu'**un système de convergence de la lumière à l'intérieur d'une colonne du collecteur comprend un cône de collection dont les faces font un angle de a° avec l'axe principal dudit cône de collection l'axe du cône étant aligné avec l'axe principal de la colonne du collecteur, et tel que les surfaces du cône de collection soient réfléchissantes comme un miroir, des trous d'insertion de fibres optiques percés sur la colonne de collection en vis-à-vis du cône de collection tel que l'axe des trous forme un angle 2a° avec l'axe du cône de collection (40).

10. Dispositif selon la revendication 9, **caractérisé en ce que** les colonnes du collecteur soient montées en série (41,42).

11. Dispositif selon l'une quelconque des revendications 1 à 9, **caractérisé en ce qu'**au moins une matrice de concentration est disposée sur une dalle clipsable d'une épaisseur comprise entre 2 et 10 cm, en bois, plastique, polymère, carbone, verre, céramique, polyuréthane, polystyrène ou tout autre matériau utilisable, et comprenant au moins un collecteur pouvant connecter en série d'une dalle à l'autre, utilisable pour réaliser des couvertures de toiture ou des surfaces étanches.

12. Dispositif selon l'une quelconque des revendications 1 à 11 **caractérisé en ce qu'**au moins une matrice de concentrateurs et au moins un collecteur optique avec au moins un cône de collection concentrant la lumière dans des fibres optiques couplées à un dispositif utilisant la lumière, ou un rayonnement électromagnétique.

13. Dispositif selon l'une quelconque des revendications 1 à 12 **caractérisé en ce qu'**au moins une matrice de concentrateurs optiques concentre la lumière dans des fibres optiques, lesdites fibres optiques étant utilisées comme système d'excitation lumineux de laser en remplacement, le cas échéant, complément de lampe flash, de diode d'excitation, et plus généralement d'autre système d'excitation lumineux pour laser ou tout autre procédé nécessitant une lumière d'excitation.

14. Dispositif selon l'une quelconque des revendications 1 à 12 **caractérisé en ce que** les fibres optiques provenant d'au moins une matrice de concentration soient connectées à une enceinte close contenant un gaz, un liquide tel que l'enceinte close comporte préférentiellement une vessie, un piston et tel que les fibres optiques permettent d'injecter de la lumière dans l'enceinte close pour augmenter la température et la pression du gaz.

## Patentansprüche

1. Vorrichtung, umfassend mindestens
a. eine Matrix optischer Konzentratoren (1), wobei die Konzentrationsmatrix umfasst
i. Hohlsäulen (1), deren reflektierende Innenflächen (5,31) möglicherweise parallel, jedoch vorzugsweise divergierend sind, um einen divergierenden Kegel zu bilden, dessen Basis am Boden der Säule (31) angeordnet ist, sodass ein Kegel inverser Integration gebildet wird, und wobei ein Querschnitt einer Säule eines Konzentrators eine beliebige geometrische Form aufweist, und wobei der Boden jeder Säule eine Öffnung zur Durchführung mindestens eines fokussierenden Lichtleiters (7) umfasst, wobei der Boden jeder Säule vorzugsweise konisch (6) ausgebildet ist, mit der Öffnung an der Spitze der konischen Form, und dass
ii. jede Säule mindestens eine Prismenstruktur (25,47) umfasst, die bei Längsschnitt durch die Achse eine Dreiecksform aufweist, wobei die Prismenstruktur insgesamt aus einem transparenten Material hergestellt ist, und dass
iii. jede Säule mindestens eine Vorrichtung zur Einkopplung von Licht in einen Lichtleiter (6,55) umfasst
b. mindestens eine Lichtleitermatrix (2,7),
c. mindestens einen optischen Kollektor (3), der mindestens einen Sammelkegel (35,45) umfasst,
- wobei jede Konzentratorsäule das Auffangen von Sonnenstrahlung und deren Konzentrieren in einem der ein Lichtleiterbündel bildenden Lichtleiter ermöglicht, wobei jede optische Konzentratorsäule der Matrix dazu ausgelegt ist, das Sonnenlicht zu bündeln oder umzulenken, damit dieses Licht durch die Lichtleiter der Fasermatrix aufgefangen wird, wobei die Lichtleiter mit dem Kollektor verbunden sind, um das Licht durch den Kollektor in mindestens einem Lichtleiter oder mindestens einem Lichtstrahl am Ausgang des Kollektors zu fokussieren, mit dem die Lichtleiter verbunden sind.

2. Vorrichtung nach Anspruch 1, **dadurch gekennzeichnet, dass** ein optischer Konzentrator der Konzentratormatrix am Eingang jeder Säule eine vorzugsweise konvergierende Linse (24) aufweist, die vorzugsweise mit einem Abstand von einem optischen Loch (10) oder erforderlichenfalls vom Eingang eines Lichtleiters (7) angeordnet ist, der gleich der Brennweite der Linse ist, wobei die Brennweite der Linse unter Berücksichtigung der Brechungsindices der optischen Medien zwischen der Linse und dem Eingang des Lichtleiters oder des optischen Lochs berechnet wird, wobei die Linsen aus allen Materialien bestehen können, die den Durchgang des größtmöglichen Spektrums von Sonnenlicht ermöglichen, von infrarot bis ultraviolett.

3. Vorrichtung nach Anspruch 1, **dadurch gekennzeichnet, dass** jeder optische Konzentrator der Konzentratormatrix in jeder Säule mindestens einen Integrationskegel (26) umfasst, z. B. im Bereich vom Rand der Basis einer Prismenstruktur bis zu einem optischen Loch, gegebenenfalls bis zum Eingang eines Lichtleiters (7), wobei die Spitze des Integrationskegel so abgestumpft ist, dass sie sich zu einem optischen Loch hin öffnet, gegebenenfalls zum Eingang mindestens eines Lichtleiters, wobei die Wände des Integrationskegels eine Neigung gegenüber der Vertikalen aufweisen und wobei der obere Abschnitt des Integrationskegels einen Spiegel (28) aufweist, wobei der Spiegel vorzugsweise ein parabolisches Profil (51) mit aufeinander folgenden geneigten Ebenen (52,53,54) aufweist, wobei das Profil es ermöglicht, das Licht zu bündeln, das aus der Prismenstruktur zu einer Faser oder dem Fasereinkopplungssystem gerichtet austritt.

4. Vorrichtung nach einem der Ansprüche 1 bis 3, **dadurch gekennzeichnet, dass** jede Säule eines optischen Konzentrators der Konzentratormatrix mindestens einen sphärischen Diopterabschnitt (27, 69) umfasst, wobei das Zentrum des sphärischen Diopters über dem Eingang eines optischen Lochs zentriert ist, gegebenenfalls über dem Eingang eines Lichtleiters, und der Brechungsindex n4 des Diopters vorzugsweise größer als der des vorgelagerten Mediums und vorzugsweise kleiner oder gleich dem Index n5 der Faser ist.

5. Vorrichtung nach Anspruch 1, **dadurch gekennzeichnet, dass** jede optische Konzentratorsäule der Konzentratormatrix mindestens ein System mindestens einer divergierenden Linse umfasst, wobei die mindestens eine Linse ringförmig (30) und hohl in ihrer Mitte ist, mit einem Brennpunkt, der einen Kreis um die Querschnittsfläche einer Säule beschreibt.

6. Vorrichtung nach Anspruch 1, **dadurch gekennzeichnet, dass** die Vorrichtung zur Einkopplung von Licht mindestens eine Ringstruktur mit Prismenquerschnitt (48) mit mindestens einer reflektierenden Fläche (49,50) umfasst.

7. Vorrichtung nach einem der Ansprüche 1 bis 6, **dadurch gekennzeichnet, dass** ein optischer Konzentrator der Konzentratormatrix irgendeine Kombination aus mindestens einer konvergierenden Linse am Eingang jeder Säule, mindestens einer Prismenstruktur, mindestens einem Integrationskegel, mindestens einem inversen Integrationskegel, mindestens einem sphärischen Diopterabschnitt und mindestens einem System mindestens einer ringförmigen divergierenden Linse aufweist.

8. Vorrichtung nach einem der Ansprüche 1 bis 7, **dadurch gekennzeichnet, dass** ein optischer Kollektor mindestens eine Kollektorsäule (33) aufweist, wobei die Innenflächen der Kollektorsäule reflektierend sind, sodass sie einen Spiegel bilden, und dass der Kollektor ein System zur Faserverbindung des Konzentrators (8), und eine beliebige Kombination eines Systems zum Bündeln von Licht in Richtung eines optischen Lochs, gegebenenfalls des Eingangs von mindestens einer Faser (45,44), ein System der Lichteinkopplung in die Faser aufweist.

9. Vorrichtung nach Anspruch 8, **dadurch gekennzeichnet, dass** ein System zum Bündeln des Lichtes im Inneren einer Kollektorsäule einen Sammelkegel umfasst, dessen Seiten einen Winkel von a° mit der Hauptachse des Sammelkegels bilden, wobei die Achse des Kegels an der Hauptachse der Kollektorsäule ausgerichtet ist, wobei die Oberflächen des Sammelkegels reflektierend wie ein Spiegel sind, Löcher zum Einführen von Lichtleitern gegenüber dem Sammelkegel an der Sammelsäule gebohrt sind, sodass die Achse der Löcher einen Winkel 2a° mit der Achse des Sammelkegels (40) bilden.

10. Vorrichtung nach Anspruch 9, **dadurch gekennzeichnet, dass** die Kollektorsäulen in Reihe angeordnet sind (41, 42).

11. Vorrichtung nach einem der Ansprüche 1 bis 9, **dadurch gekennzeichnet, dass** mindestens eine Konzentrationsmatrix auf einer aufsteckbaren Platte mit einer Dicke zwischen 2 und 10 cm angeordnet ist, die aus Holz, Plastik, Polymer, Kohlenstoff, Glas, Keramik, Polyurethan, Polystyrol oder einem anderen Werkstoff besteht, umfassend mindestens einen Kollektor, der in der Lage ist, eine Platte mit einer anderen in Reihe zu verbinden, verwendbar zur Ausführung von Bedachungen oder dichten Oberflächen.

12. Vorrichtung nach einem der Ansprüche 1 bis 11, **dadurch gekennzeichnet, dass** mindestens eine Konzentratormatrix und mindestens ein optischer Kollektor mit mindestens einem Sammelkegel, der das Licht in Lichtleitern sammelt, die mit einer Vorrichtung gekoppelt sind, die das Licht oder eine elektromagnetische Strahlung verwendet.

13. Vorrichtung nach einem der Ansprüche 1 bis 12, **dadurch gekennzeichnet, dass** mindestens eine optische Konzentratormatrix das Licht in den Lichtleitern konzentriert, wobei die Lichtleiter als System zur Lichtanregung von Lasern als Alternative verwendet werden, gegebenenfalls als Ergänzung von Blitzlampen, Erregerdioden und generell von anderen Lichtanregungssystemen für Laser oder andere Verfahren, die ein Anregungslicht erfordern.

14. Vorrichtung nach einem der Ansprüche 1 bis 12, **dadurch gekennzeichnet, dass** die Lichtleiter aus mindestens einer Konzentrationsmatrix mit einem geschlossenen Behälter verbunden sind, der ein Gas, eine Flüssigkeit enthält, wobei der geschlossene Behälter vorzugsweise einen Balg, einen Kolben aufweist und wobei die Lichtleiter das Einkoppeln von Licht in den geschlossenen Behälter ermöglichen, um Temperatur und Druck des Gases zu erhöhen.

## Claims

1. Device, comprising at least
a) a matrix of optical concentrators (1), such that the concentration matrix comprises:
i) hollow columns (1), whose internal reflective faces (5, 31) are possibly parallel, but preferably diverging to form a diverging cone whose base is located at the bottom of the column (31) thus constituting an reverse integration cone, and such that a cross-section of a column of a concentrator has any geometrical shape, and such that the bottom of each column comprises an orifice for passing at least one concentration optical fibre (7) the bottom of each column preferably having conical (6) shape, with at the summit of the conical shape said orifice, and that
ii) each column comprises, at least one prismatic structure (25, 47) having, by longitudinal section passing by the axis, a triangular shape, said prismatic structure being produced in any transparent material, and that
iii) each column comprises at least one light injection device in an optical fibre (6, 55),
b) at least one matrix of optical fibres (2, 7),
c) at least one optical collector (3) comprising at least one collection cone (35, 45), each column of the concentrator enabling the capture of solar radiation and the concentration in one of said optical fibres forming a bundle of optical fibres, each optical concentrator column of the matrix being configured to make converge or deviate the sun light, so that this light is captured by the optical fibres of the matrix of fibres, said optical fibres being connected to said collector to concentrate the light across the collector into at least one optical fibre or at least one light ray at the output of the collector to which said optical fibres are connected.

2. Device according to claim 1, **characterised in that** one optical concentrator of the matrix of concentrators comprises at the entry of each column a preferably converging lens (24) and preferably arranged at a distance from an optical hole (10) or as required from the entry of an optical fibre (7) equal to the focal length of said lens, the focal length of the lens being calculated taking into account the refractive indices of the optical media between the lens and the entry of the fibre or optical hole, the lenses being made of any material permitting the passing of the greatest spectrum possible of sun light going from infrared to ultraviolet.

3. Device according to claim 1 **characterised in that** each optical concentrator of the matrix of concentrators comprises in each column, at least one integration cone (26) going for example from the edge of the base of one prismatic structure as far as an optical hole, as required to the entry of an optical fibre (7), the summit of the integration cone being truncated so as to open towards an optical hole, as required the entry of at least one optical fibre, the walls of said integration cone having an angle in relation to the vertical and such that the top part of the integration cone comprises a mirror (28), said mirror preferably having a parabolic profile (51), successive angled planes (52,53,54), said profile enabling the convergence of the light leaving the prismatic structure towards a fibre or fibre injection system.

4. Device according to any one of claims 1 and 3 **characterised in that** each column of an optical concentrator of the matrix of concentrators comprises, at least one portion of spherical dioptre (27, 69), the centre of said spherical dioptre being centred on the entry of an optical hole, as required on the entry of an optical fibre, the refractive index n4 of the dioptre preferably being greater than the upstream medium and preferably less than or equal to the index n5 of the fibre.

5. Device according to claim 1, **characterised in that** each column of optical concentrator of the matrix of concentrators comprises at least one system of at least one diverging lens such that the at least one lens is annular (30) hollow at its centre with a focus forming a circle limited to one cross-section of a column.

6. Device according to claim 1, **characterised in that** the light injection device comprises at least one annular structure with prismatic section (48) with at least one reflective face (49, 50).

7. Device according to any one of claims 1 to 6, **characterised in that** one optical concentrator of the matrix of concentrators comprises any combination of at least one converging lens at the entry of each column, at least one prismatic structure, at least one integration cone, at least one reverse integration cone, at least one portion of spherical dioptre and at least one system of at least one annular diverging lens.

8. Device according to any one of claims 1 to 7, **characterised in that** one optical collector comprises at least one column of the collector (33), such that the internal faces of the column of the collector are reflective so as to form a mirror, and that the collector comprises a fibre connection system of concentrator (8), and any combination of a convergence system of the light towards an optical hole, as required the entry of at least one fibre (45, 44), an injection system of the light into the fibre.

9. Device according to claim 8, **characterised in that** a convergence system of the light inside a column of the collector comprises a collection cone whose faces make an angle of a° with the main axis of said collection cone, the axis of the cone being aligned with the main axis of the column of the collector, and such that the surfaces of the collection cone are reflective like a mirror, the insertion holes of optical fibres drilled on the collection column opposite the collection cone such that the axis of the holes forms an angle 2a° with the axis of the collection cone (40).

10. Device according to claim 9, **characterised in that** the columns of the collector are mounted in series (41, 42).

11. Device according to any one of claims 1 to 9, **characterised in that** at least one concentration matrix is arranged on a slab that can be clipped with thickness between 2 and 10 cm, made of wood, plastic, polymer, carbon, glass, ceramic, polyurethane, polystyrene or any other usable material, and comprising at least one collector capable of connecting in series from one slab to the other, usable to produce roof coverings or waterproof surfaces.

12. Device according to any one of claims 1 to 11 **characterised in that** at least one concentrator matrix and at least one optical collector with at least one collection cone concentrating light into the optical fibres is coupled to a device using light, or electromagnetic radiation.

13. Device according to any one of claims 1 to 12 **characterised in that** at least one matrix of optical concentrators concentrates light into the optical fibres, said optical fibres being used as system of laser light excitation by replacement, as required, complement of flashlight, excitation LED, and more generally other system of light excitation for laser or any other process requiring excitation light.

14. Device according to any one of claims 1 to 12 **characterised in that** the optical fibres coming from at least one concentration matrix are connected to a closed chamber containing gas or liquid such that the closed chamber preferably comprises a bladder or piston and such that the optical fibres enable the injection of light into the closed chamber to increase the temperature and pressure of the gas.
